# EUROPÄISCHE PATENTSCHRIFT

(11) **EP 0 848 170 B1**
(45) Veröffentlichungstag und Bekanntmachung des Hinweises auf die Patenterteilung: **28.02.2001**
(21) Anmeldenummer: 97810943.7
(22) Anmeldetag: 03.12.1997
(51) Int. Cl.: F16B 13/00

(54) **Selbstschneidender Hinterschnittdübel**
Self-undercutting anchor
Cheville d'ancrage autocoupante

(30) Priorität: 16.12.1996 DE 19652280
(43) Veröffentlichungstag der Anmeldung: 17.06.1998
(73) Patentinhaber: HILTI Aktiengesellschaft, 9494 Schaan (LI)
(72) Erfinder: Kaibach, Werner, 86807 Buchloe (DE); Raber, Stefan, 86916 Kaufering (DE); Schad, Hanspeter, 9472 Grabs (CH); Doppelbauer, Thomas, 6800 Feldkirch (AT)
(74) Vertreter: Wildi, Roland

(56) Entgegenhaltungen:
- DE-A- 2 103 132
- FR-A- 1 388 807
- US-A- 1 621 598
- US-A- 3 202 035
- US-A- 4 702 654

## Beschreibung

Die Erfindung betrifft einen selbstschneidenden Hinterschnittdübel gemäss dem Oberbegriff des Patentanspruchs 1.

In der Befestigungstechnik ist es vielfach erforderlich, weitgehend spreizdruckfreie Befestigungen zu erstellen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Dazu wird die zylindrische Aufnahmebohrung in einer definierten Tiefe mit einer Hinterschneidung versehen. Das in die vorbereitete Aufnahmebohrung einsetzbare Befestigungselement umfasst eine Ankerstange mit einem sich in Setzrichtung erweiternden Kopfteil und eine Hülse mit einer Durchgangsbohrung, die auf die Ankerstange aufgeschoben ist. Die Hülse ist mit ausstellbaren Segmenten versehen, die durch eine Relativverschiebung der Hülse und der Ankerstange in die Hinterschneidung ausstellbar sind.

Zur Erstellung der Hinterschneidung ist in den meisten Fällen ein spezielles Gerät erforderlich, welches eine in der Aufnahmebohrung exzentrisch umlaufende, abrasive Schneide aufweist, mit der die Hinterschneidung in die Bohrlochwandung gefräst wird. Es sind auch Hinterschnittdübel bekannt, die sich beim Setzvorgang selbsttätig eine Hinterschneidung erzeugen. Ein derartiger selbstschneidender Hinterschnittanker ist beispielsweise in der US-A-4,702,654 beschrieben und besitzt eine Hülse, die an ihrem in Setzrichtung vorderen Ende Spreizlappen aufweist, die sich von einem plastischen Gelenk in Richtung eines sich konisch erweiternden Kopfteils am vorderen Ende der Ankerstange erstrecken. Die Spreizlappen sind durch das Aufschieben der Hülse auf das sich am Grund der Aufnahmebohrung abstützende Kopfteil radial ausstellbar. Die Spreizlappen sind mit stiftförmigen Schneiden ausgestattet, die in die Aussenfläche der Spreizlappen eingesetzt sind. Indem die Hülse rotiert wird, fräsen die Schneiden, die den

Umfang der Hülse überragen, während des Ausstellens der Spreizlappen eine Hinterschneidung in die Bohrlochwandung. Der Setzvorgang des Hinterschnittdübels ist beendet, wenn die Hülse den erforderlichen axialen Verschiebeweg zurückgelegt hat und die Spreizlappen im gewünschten Ausmass ausgestellt sind.

Das Setzen dieses bekannten selbstschneidenden Hinterschnittdübels erfolgt mit Hilfe eines Dreh-Schlag-Bohrgerätes, um die Hülse schlagend-drehend auf das sich konisch erweiternde Kopfteil aufzutreiben. Bei den bekannten selbstschneidenden Hinterschnittdübeln wird die schlagende Komponente des Bohrgerätes nicht sehr effektiv für die Erstellung der Hinterschneidung genutzt. Dadurch verlängert sich der Setzvorgang und es kann auch vorkommen, dass die Spreizlappen des Hinterschittdübels nicht vollständig aufgespreizt werden. Insbesondere bei Kontakt mit im Untergrund befindlichen Bewehrungseisen kann die Erzeugung der Hinterschneidung stark beeinträchtigt sein, was sich negativ auf die erzielbaren Haltewerte auswirken kann. Auch können sich die in die Aussenfläche der Spreizlappen eingesetzten Schneidstifte durch die hohe axiale Belastung durch die axialen Schläge des Bohrgeräts beim Setzvorgang lösen und herausfallen.

Aus der US-A-1,621,598 oder der US-A-3,202,035 sind selbstbohrende Dübel bekannt, die eine Hülse aufweisen, die an ihrem einen, vorderen Abschnitt mit durch Längsschlitze voneinander getrennten Spreizlappen versehen ist. Die Hülse ist auf ein sich in Setzrichtung konisch erweiterndes Kopfteil auftreibbar, wobei die Spreizlappen radial ausgestellt werden. Die Spreizlappen weisen eine zahnartige Form mit einer in Drehrichtung vorlaufenden Schneidkante und einer nachlaufenden Seitenkante auf. Die Schneidkante und die Seitenkante sind gegenüber der Achse der Hülse geneigt, wobei die Summe der beiden Neigungswinkel kleiner als 160° ist. Bei diesen beiden selbstbohrenden Dübeln handelt es sich um keine eigentlichen Hinterschnittdübel. Vielmehr wird mit diesen Selbstbohrdübeln zunächst ein zylindrisches Bohrloch vorgebohrt. Danach wird der Selbstbohrdübel wieder aus dem Bohrloch entfernt, um das konische Kopfteil an das Vorderende der Hülse anzustecken. Danach wird der Selbstbohrdübel wieder in das Bohrloch eingesteckt und durch axiale Schläge auf das vom Vorderende der Hüse abragende, konische Kopfteil aufgetrieben. Die Spreizlappen werden dadurch radial ausgestellt und erzeugen meisselnd einen kleinen Formschluss. Der Verankerungsvorgang dieser Art von Selbstbohrdübeln ist umständlich und relativ zeitaufwendig. Das Kopfteil ist ein separates Teil, das für die Erstellung der zylindrischen Bohrung abgenommen werden muss. Dies birgt die Gefahr in sich, dass das Kopfteil verloren geht. Die erzielbaren Lastwerte sind infolge des nur relativ kleinen Formschlusses vergleichsweise bescheiden und kommen an die Lastwerte, die mit eigentlichen Hinterschnittsystemen erzielbar sind, nicht heran.

Aufgabe der vorliegenden Erfindung ist es daher, diesen Nachteilen des Stands der Technik abzuhelfen. Es soll ein selbstschneidender Hinterschnittdübel geschaffen werden, mit dem die Schlagenergie des Dreh-Schlag-Bohrgerätes effektiv für die Erstellung der Hinterschneidung in einer zylindrischen Aufnahmebohrung genutzt wird. Der Hinterschnittdübel soll in kurzer Zeit gesetzt werden können und seine Spreizlappen sollen auch bei Kontakt mit Bewehrungseisen eine ausreichend grosse Hinterschneidung fräsen. Die Gefahr eines Verlustes der die Hinterschneidung erzeugenden, schneidenden Elemente an den Spreizlappen soll verringert sein.

Die Lösung dieser Aufgaben besteht in einem selbstschneidenden Hinterschnittdübel, der die im kennzeichnenden Abschnitt des Anspruchs 1 aufgeführten Merkmale aufweist. Der erfindungsgemässe selbstschneidende Hinterschnittdübel umfasst eine Ankerstange mit einem sich in Setzrichung erweiternden Kopfteil und eine die Ankerstange umgebende Hülse. Die Hülse ist an ihrem dem Kopfteil zugewandten Abschnitt mit durch Längsschlitze voneinander getrennten Spreizlappen ausgestattet, die durch eine axiale Relatiwerschiebung der Hülse und der Ankerstange auf das Kopfteil auftreibbar und radial ausstellbar sind. Wenigstens einer der Spreizlappen ist zahnartig ausgebildet und weist eine Schneide auf, mit der bei Rotation der Hülse der Untergrund zur Erzeugung einer Hinterschneidung abrasiv bearbeitbar ist. Die Schneide ist an einer in Drehrichtung der Hülse vorlaufenden Seitenkante des Spreizlappens angeordnet und gegenüber der Achse der Hülse um einen ersten Winkel (a) geneigt. Der Spreizlappen weist auch eine nachlaufende Seitenkante auf, die gegenüber der Achse der Hülse um einen zweiten Winkel (β) geneigt ist. Die Summe der beiden Winkel ist kleiner als 160°. Der den Spanwinkel bildende erste Winkel, unter dem die Schneide gegenüber der Achse der Hülse geneigt ist, beträgt etwa 5° bis etwa 70°, vorzugsweise etwa 10° bis etwa 50°, und ist kleiner als der den Freiwinkel festlegende zweite Winkel, unter dem die nachlaufende Seitenkante gegenüber der Achse der Hülse geneigt verläuft. Dabei ist der zweite Winkel grösser als etwa 15°, vorzugsweise grösser als 30°, aber kleiner als 90°.

Der erfindungsgemässe selbstschneidende Hinterschnittdübel besitzt eine Hülse mit Spreizlappen und wenigstens einer Schneide, die an einem zahnartig ausgebildeten Spreizlappen vorgesehen ist. Die Schneide ist an einer in Drehrichtung vorlaufenden Seitenkante des Spreizlappens angeordnet. Sie ist gegenüber der Achse der Hülse geneigt und bildet einen Spanwinkel. Eine nachlaufende Seitenkante des Spreizlappens ist ebenfalls gegenüber der Achse der Hülse geneigt und bildet einen Freiwinkel. Der Spanwinkel und der Freiwinkel gemäss der erfindungsgemässen Gestaltung des Schneiden tragenden Spreizlappens unterstützen den Abbauvorgang der Schneide und sorgen für eine effektive Umsetzung der Schlagenergie des Dreh-Schlag-Bohrgeräts in eine abrasive Bearbeitung des Untergrunds. Indem die Schlagenergie besser in den zu bearbeitenden Untergrund eingeleitet wird, reduziert sich die Zeit für die Erstellung der Hinterschneidung. Selbst bei Kontakt mit Bewehrungseisen kann die Hinterschneidung in ausreichendem Umfang erstellt werden und können die erforderlichen Lastwerte erzielt werden. Die erfindungsgemässe Anordnung der Schneide an einer vorlaufenden Kante des Spreizlappens verringert die Gefahr eines Abscherens der Schneide, indem die bei der abrasiven Bearbeitung des Untergrunds auf die Schneide wirkenden Kräfte besser von dem Spreizlappen aufgenommen werden. Durch die erfindungsgemässen Winkelverhältnisse wird die Schlagenergie besonders gut in den Untergrund eingeleitet. Der den Freiwinkel festlegende zweite Winkel fördert die Erstellung der Hinterschneidung noch zusätzlich, indem das abgetragene Material entgegen der Drehrichtung der Drehhülse ausweichen kann und den neuen Materialabtrag nicht behindert.

Das freie Vorderende des Schneiden tragenden Spreizlappens ist in einer vorteilhaften Variante der Erfindung stumpf ausgebildet und weist insbesondere einen etwa senkrecht zur Dübelachse verlaufenden Stirnabschnitt auf. Das derart ausgebildete freie Vorderende ist einfach in der Herstellung und bietet beispielsweise bei einer induktiven Härtung der Schneide Vorteile, da die Kontaktfläche optimiert werden kann.

Um die Effektivität der Schneide bei der Erstellung der Hinterschneidung noch weiter zu verbessern, weisen die Schneide und gegebenenfalls der Stirnabschnitt mit Vorteil Stirnflächen auf, die gegenüber der Aussenseite des Spreizlappens unter einem Winkel von etwa 10° bis etwa 85°, vorzugsweise etwa 30° bis etwa 85°, geneigt verlaufen. Die geneigten Stirnflächen wirken wie Meissel und unterstützen das Herausschlagen von grösseren Stücken aus dem Untergrund. Dadurch kann der Materialabtrag weiter verbessert werden.

In einer alternativen Ausführungsvariante können die Schneide und gegebenenfalls der Stirnabschnitt gekrümmte Stirnflächen aufweisen. Die gekrümmten Stirnflächen können zwar zu einem geringfügig verringerten Materialabtrag führen; dafür ist aber auch die Gefahr eines Festklemmens der Schneide im Untergrund verringert. Insbesondere bei Kontakt mit Bewehrungseisen kann die gekrümmte Stirnfläche ein Verhaken der Schneide verhindern.

In einer Ausführungsform des erfindungsgemässen Hinterschnittdübels ist die Schneide ein Hartmetalleinsatz, der in die vorlaufende Seitenfläche des Spreizlappens eingesetzt ist. Die Hartmetalleinsätze besitzen den Vorteil, dass sie in der gewünschten Härte herstellbar sind und an die Form der Spreizlappen als Trägerkörper angepasst werden können. Die Hartmetalleinsätze können, losgelöst von der Herstellung der Hülse des Hinterschnittdübels, massentechnisch hergestellt und gelagert werden, bis sie benötigt werden.

Eine besonders einfache Herstellung der Schneide besteht darin, dass sie vom freien Endabschnitt des Spreizlappens gebildet ist. Wenigstens die vorlaufende Seitenkante des Spreizlappens ist dabei gehärtet. Die Härtung kann beispielsweise durch Induktionshärten, Laserhärten oder ein anderes lokal wirkendes Härtungsverfahren durchgeführt werden. Dabei muss nur darauf geachtet werden, dass das plastische Gelenk, welches die Spreizlappen mit dem Rest der Spreizhülse verbindet, nicht versprödet.

Für die materialabtragenden Eigenschaften ist es von Vorteil, wenn die Schneide etwa 1,5 mal bis etwa 8 mal, vorzugsweise 2 mal bis 6 mal, härter ist als das Material der Hülse.

Der erfindungsgemässe Hinterschnittdübel weist mit Vorteil mehrere Schneiden auf. Dabei ist die Zahl der Schneiden kleiner oder gleich der Anzahl Spreizlappen und kann beispielsweise bis zu 10 betragen. Die grössere Zahl an Schneiden erhöht den Materialabtrag und beschleunigt die Erstellung der Hinterschneidung und verringert die für den Setzvorgang erforderliche Zeit. Die Schneiden können alle gleich ausgebildet sein. Vorzugsweise besitzen die Schneiden wenigstens teilweise voneinander abweichende, Spanwinkel bildende, erste Winkel. Dadurch können die Schneiden unterschiedliche Funktionen erfüllen. Beispielsweise kann ein Teil der Schneiden hinsichtlich des Materialabtrags im Untergrund optimiert sein, während die übrigen Schneiden eine besonders gute spanabhebende Schneidfunktion bei Kontakt mit Bewehrungseisen aufweisen. Vorzugsweise sind die derart spezifisch optimierten Schneiden in abwechselnder Folge in Umfangsrichtung angeordnet.

Eine besonders kostengünstige Variante des Hinterschnittdübels besteht darin, dass die Hülse ein Blech-Stanz-Biegeteil ist. Die Hülse kann mit der gewünschten zahnartigen Schneidengrundform aus einem geeigneten planen Blech herausgestanzt werden. Danach kann beispielsweise in Querwalz- und Prägeschritten den Spreizlappen und den Schneiden die endgültige Form gegeben werden. Danach wird das Blechteil zu einer Hülse gerollt und auf der Ankerstange montiert.

Im folgenden wird die Erfindung unter Bezugnahme auf die in den schematischen Zeichnungen dargestellten Ausführungsbeispiele näher erläutert. Es zeigen in zum Teil unterschiedlichen Massstäben:
Fig.1 einen Axialschnitt eines erfindungsgemässen Hinterschnittdübels;
Fig. 2 eine erste Variante eines mit Schneiden versehenen Spreizlappens;
Fig. 3 eine zweite Variante eines mit Schneiden versehenen Spreizlappens;
Fig. 4 eine Ansicht des freien Vorderendes der Hülse ohne Ankerstange;
Fig. 5 eine Hülse als Blech-Stanz-Biegeteil im abgewickelten Zustand; und
Fig. 6 einen Axialschnitt des Blech-Stanz-Biegeteils aus Fig. 5.

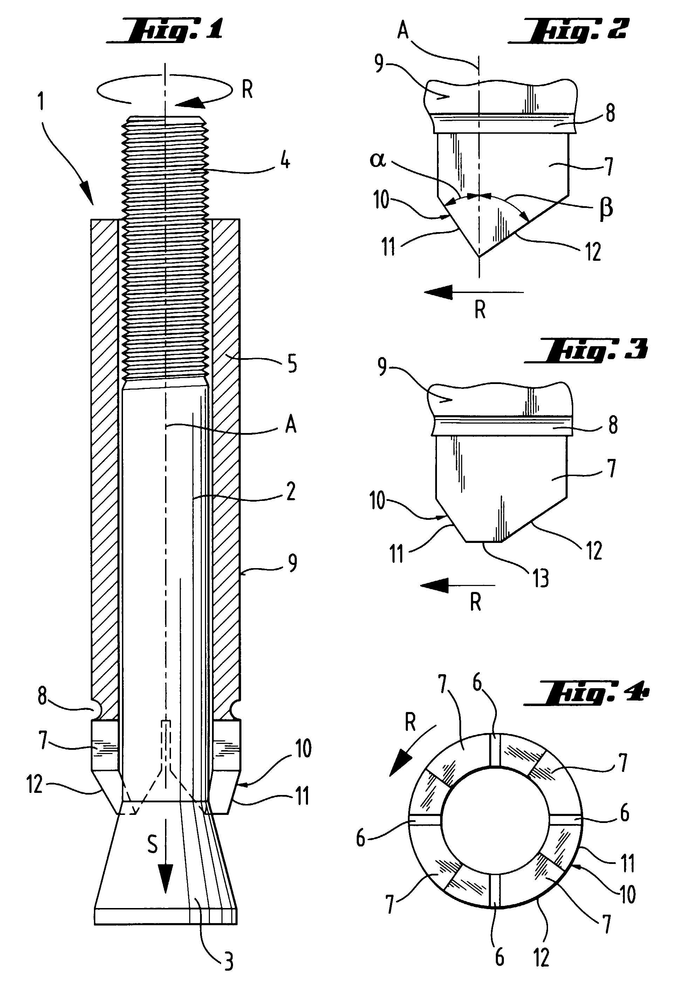

In Fig. 1 ist ein Ausführungsbeispiel eines erfindungsgemäss ausgebildeten selbstschneidenden Hinterschnittdübels gesamthaft mit dem Bezugszeichen 1 versehen. Der Hinterschnittdübel umfasst eine Ankerstange 2 mit einem sich in Setzrichtung S erweiternden Kopfteil 3. Das Kopfteil 3 besitzt, wie beispielsweise dargestellt, die Gestalt eines Kegelstumpfes. Anstelle einer Kegelfläche kann das Kopfteil auch eine konkav gekrümmte Aussenfläche aufweisen. Am dem Kopfteil 3 gegenüberliegenden Endbereich der Ankerstange 2 ist ein Aussengewinde 4 als Lastangriffsmittel vorgesehen. Auf der Ankerstange 2 ist eine Hülse 5 axial verschiebbar angeordnet. Die Hülse 5 besitzt an ihrem dem Kopfteil 3 zugewandten Abschnitt eine Anzahl von durch axial verlaufende Schlitze 6 voneinander getrennte Spreizlappen 7. Die Spreizlappen 7 sind durch ein plastisches Gelenk 8 von der übrigen Hülse 5 getrennt. Das plastische Gelenk 8 wird, wie beispielsweise dargestellt, von einer senkrecht zur Dübelachse A angeordneten umlaufenden Rille an der Aussenfläche 9 der Hülse gebildet. Durch eine Relativbewegung zwischen der Hülse 5 und der Ankerstange 2 ist die Hülse 5 unter Ausstellen der Spreizlappen 7 auf das sich in Setzrichtung S erweiternde Kopfteil 3 auftreibbar.

Wie insbesondere aus den Fig. 1 - 3 ersichtlich, sind die Spreizlappen 7 wenigstens teilweise zahnartig ausgebildet. Die Schneiden 10 sind dabei an einer in Drehrichtung R der Hülse 5 vorlaufenden Seitenkante 11 der Spreizlappen 7 vorgesehen. Die vorlaufende Seitenkante 11 ist gegenüber der Achse A der Hülse 5 um einen ersten Winkel a geneigt, der etwa 5° bis etwa 70°, vorzugsweise etwa 10° bis etwa 50°, beträgt. Der Spreizlappen 7 besitzt auch eine in Drehrichtung R der Hülse 5 nachlaufende Seitenkante 12, die mit der Achse A der Hülse 5 einen zweiten Winkel ß einschliesst, der grösser ist als der Neigungswinkel α der vorlaufenden Seitenkante 11 und grösser als etwa 15°, vorzugsweise grösser als 30°, aber kleiner als 90° ist. Die beiden Winkel α, β sind derart gewählt, dass ihre Summe 160° nicht überschreitet.

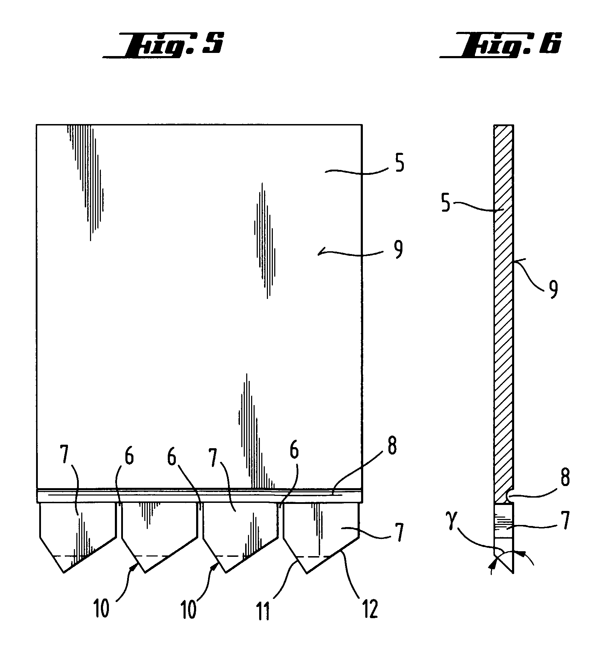

Wie in Fig. 2 und 4 dargestellt, können die vorlaufende und die nachlaufende Seitenkante 11 bzw. 12 eines Schneiden 10 tragenden Spreizlappens 7 unter Bildung einer Kante am freien Vorderende des Spreizlappens 7 aufeinandertreffen. Bei der in Fig. 3 dargestellten Variante ist das freie Vorderende des Schneiden tragenden Spreizlappens 7 stumpf ausgebildet. Insbesondere sind die vorlaufende und die nachlaufende Seitenkante 11 bzw. 12 durch einen Stirnabschnitt 13 miteinander verbunden, der etwa senkrecht zur Achse A der Hülse 5 verläuft.

Die Spreizlappen 7 mit den Schneiden 10 und dem plastischen Gelenk können spanabhebend oder in einem Kaltumformprozess hergestellt werden. Besonders vorteilhaft ist es, wenn die Hülse 5 aus einem Blech-Stanz-Biegeteil gefertigt ist, wie es beispielsweise in Fig. 5 und 6 dargestellt ist. Fig. 5 zeigt die Hülse 5 im abgewickelten Zustand. Die zahnartige Form der von Längsschlitzen 6 voneinander getrennten Spreizlappen 7 ist deutlich erkennbar. Insbesondere sind die Schneiden tragenden Spreizlappen 7, gemäss der Darstellung in Fig. 2, mit unter Bildung einer Kante aufeinandertreffenden vorlaufenden und nachlaufenden Seitenkanten 11 bzw. 12 ausgebildet. Das plastische Gelenk 8 ist von einer senkrecht zur Achse der Hülse in der Aussenfläche 9 der Hülse 5 angeordneten Rille gebildet. Die Herstellung der Rille 8 erfolgt beispielsweise durch Prägen. Wie aus Fig. 6 ersichtlich, weisen die Schneiden 10 Stirnflächen auf, die mit der Aussenfläche 9 der Hülse 5 einen Winkel γ von etwa 10° bis etwa 85°, vorzugsweise 30° bis etwa 85°, einschliessen. In einer alternativen Ausführungsvariante kann am freien Vorderende auch ein Radius vorgesehen sein.

Wie bereits aus Fig. 6 ersichtlich, sind mit Vorteil an mehreren, vorzugsweise an allen, Spreizlappen 7 Schneiden 10 vorgesehen. Dabei können die Schneiden Hartmetalleinsätze sein, die an den vorlaufenden Seitenkanten 11 in die Spreizlappen 7 eingebettet sind. Die Schneiden 10 können auch von den freien Endabschnitten der Spreizlappen 7 gebildet sein, wobei immer wenigstens die vorlaufenden Längskanten 11 der Spreizlappen 7 gehärtet sind. Die Härte der vorlaufenden Längskanten 11 ist etwa 1,5 mal bis etwa 8 mal, vorzugsweise 2 mal bis 6 mal, grösser als diejenige des Hülsenmaterials. Die Hülse 5 kann, wie in Fig. 5 angedeutet, mit Spreizlappen 7 ausgestattet sein, die alle Schneiden aufweisen und weitgehend identisch ausgebildet sind. Es kann auch vorgesehen sein, dass die Spreizlappen 7 wenigstens teilweise Längskanten 11 aufweisen, die unter verschiedenen ersten Winkeln α gegenüber der Achse der Hülse 5 geneigt verlaufen. In diesem Fall können die Schneiden 10 an den einzelnen Spreizlappen 7 für unterschiedliche Aufgaben optimiert sein.

## Patentansprüche

1. Selbstschneidender Hinterschnittdübel umfassend eine Ankerstange (2) mit einem sich in Setzrichtung (S) erweiternden Kopfteil (3) und eine die Ankerstange (2) umgebende Hülse (5), die an ihrem dem Kopfteil (3) zugewandten Abschnitt mit durch Längeschlitze (6) voneinander getrennten Spreizlappen (7) ausgestattet ist, die durch eine axiale Relatiwerschiebung der Hülse (5) und der Ankerstange (2) auf das Kopfteil (3) auftreibbar und radial ausstellbar sind, und wenigsten einen, mit einer Schneide (10) versehenen Spreizlappen (7) aufweist, der zahnartig ausgebildet ist, wobei die Schneide (10) an einer in Drehrichtung (R) der Hülse (5) vorlaufenden Seitenkante (11) des Spreizlappens (7) angeordnet und gegenüber der Achse (A) der Hülse (5) um einen ersten Winkel (α) geneigt ist, und eine nachlaufende Seitenkante (12) des Spreizlappens (7) gegenüber der Achse (A) der Hülse um einen zweiten Winkel (β) derart geneigt ist, dass die Summe der beiden Winkel (α, β) kleiner als 160° ist, **dadurch gekennzeichnet,** dass der erste Winkel (a), unter dem die Schneide (10) geneigt verläuft, etwa 5° bis etwa 70°, vorzugsweise etwa 10° bis etwa 50°, beträgt und kleiner ist als der zweite Winkel (β), unter dem die nachlaufende Seitenkante (12) des Spreizlappens (7) gegenüber der Achse (A) der Hülse (5) geneigt verläuft, wobei der zweite Winkel (β) grösser als 15°, vorzugsweise grösser als 30°, aber kleiner als 90° ist.

2. Hinterschnittdübel nach Anspruch 1, dadurch gekennzeichnet, dass das freie Vorderende des Schneiden (10) tragenden Spreizlappens (7) stumpf ausgebildet ist und insbesondere einen etwa senkrecht zur Dübelachse (A) verlaufenden Stirnabschnitt (13) aufweist.

3. Hinterschnittdübel nach einem der vorangehenden Ansprüche, dadurch gekennzeichnet, dass die Schneide (10) und gegebenenfalls der Stirnabschnitt (13) Stirnflächen aufweisen, die gegenüber der Aussenseite (9) des Spreizlappens (7) unter einem Winkel (γ) von etwa 10° bis etwa 85°, vorzugsweise 30° bis etwa 85°, geneigt verlaufen.

4. Hinterschnittdübel nach einem der vorangehenden Ansprüche, dadurch gekennzeichnet, dass die Schneide (10) und gegenbenenfalls der Stirnabschnitt (13) gekrümmte Stirnflächen aufweisen.

5. Hinterschnittdübel nach einem der vorangehenden Ansprüche, dadurch gekennzeichnet, dass die Schneide (10) ein Hartmetalleinsatz ist, der in die vorlaufende Seitenfläche (11) des Spreizlappens (7) eingesetzt ist.

6. Hinterschnittdübel nach einem der Ansprüche 1 - 4, dadurch gekennzeichnet, dass die Schneide (10) vom freien Endabschnitt des Spreizlappens (7) gebildet ist, wobei wenigstens dessen vorlaufende Seitenkante (11) gehärtet ist.

7. Hinterschnittdübel nach einem der vorangehenden Ansprüche, dadurch gekennzeichnet, dass die Schneide (10) etwa 1,5 mal bis etwa 8 mal, vorzugsweise 2 mal bis 6 mal, härter ist als das Material der Hülse (5).

8. Hinterschnittdübel nach einem der vorangehenden Ansprüche, dadurch gekennzeichnet, dass mehrere Schneiden (10) vorgesehen sind, wobei die Zahl der Schneiden (10) kleiner oder gleich der Anzahl Spreizlappen (7) ist und die Schneiden (10) wenigstens teilweise voneinander abweichende erste Winkel (α) aufweisen.

9. Hinterschnittdübel nach einem der vorangehenden Ansprüche, dadurch gekennzeichnet, dass die Hülse (5) ein Blech-Stanz-Biegeteil ist.

## Claims

1. Selfcutting undercutting dowel, comprising an anchor bar (2) with a head portion (3) which extends in the setting direction (S) and a sleeve (5) which surrounds the anchor bar (2) and which is at its section facing towards the head portion (3) equipped with expansion tabs (7) which are separated from each other by longitudinal slots (6) and which are driven onto the head portion (3) and radially extended by an axial relative displacement of the sleeve (5) and the anchor bar (2), and comprising at least one expansion tab (7) which is provided with a cutter (10) and which is of toothlike design, and the cutter (10) is arranged on a lateral edge (11) of the expansion tab (7) leading in the rotary direction (R) of the sleeve (5) and slanted relative to the axis (A) of the sleeve (5) by a first angle (**a**), and a trailing lateral edge (12) of the expansion tab (7) is relative to the axis (A) of the sleeve slanted by a second angle (**b**) in such a manner that the sum of both angles (**a, b**) is less than 160°, **characterised in that** the first angle (**a**) at which the cutter (10) extends at a slant lies between approximately 5° and approximately 70°, preferably between approximately 10° and approximately 50°, and is smaller than the second angle (**b**) at which the trailing lateral edge (12) of the expansion tab (7) extends at a slant relative to the axis (A) of the sleeve (5), and the second angle (**b**) is greater than 15°, preferably greater than 30°, but less than 90°.

2. Undercutting dowel according to Claim 1, **characterised in that** the free front end of the cutters (10) carrying expansion tab (7) is of blunt design and comprises in particular a head section (13) which extends approximately perpendicularly to the dowel axis (A).

3. Undercutting dowel according to one of the above claims, **characterised in that** the cutter (10) and, if appropriate, the end section (13) comprises end surfaces which extend at a slant relative to the outside (9) of the expansion tab (7) at an angle (**g**) of between approximately 10° and approximately 85°, preferably between 30° and approximately 85°.

4. Undercutting dowel according to one of the above claims, **characterised in that** the cutter (10) and, if appropriate, the end section (13) have curved end surfaces.

5. Undercutting dowel according to one of the above claims, **characterised in that** the cutter (10) is a hard metal insert which is inserted into the leading lateral surface (11) of the expansion tab (7).

6. Undercutting dowel according to one of Claims 1 - 4, **characterised in that** the cutter (10) is formed by the free end section of the expansion tab (7), and at least its leading lateral edge (11) is hardened.

7. Undercutting dowel according to one of the above claims, **characterised in that** the cutter (10) is between approximately 1.5 times and approximately 8 times, preferably between 2 times and 6 times, harder than the material of the sleeve (5).

8. Undercutting dowel according to one of the above claims, **characterised in that** a plurality of cutters (10) is provided, and the number of the cutters (10) is less or equal the number of expansion tabs (7), and the cutters (10) have first angles (**a**) which at least partially differ from each other.

9. Undercutting dowel according to one of the above claims, **characterised in that** the sleeve (5) is a stamped flexural sheet metal part.

## Revendications

1. Cheville à dépouille autotaraudeuse comprenant une tige d'ancrage (2), avec une partie de tête (3) s'élargissant dans le sens d'enfoncement (S), et un manchon (5) qui entoure la tige d'ancrage (2), qui est muni, dans sa portion tournée vers la partie de tête (3), de pattes expansibles (7), lesquelles sont séparées les unes des autres par des fentes longitudinales (6) et, par suite d'un déplacement radial relatif du manchon (5) et de la tige d'ancrage (2), peuvent être poussées sur la partie de tête (3) et déployées radialement, et qui comporte au moins une patte expansible (7) pourvue d'un taillant (10) et conçue en forme de dent, le taillant (10) étant disposé sur une arête latérale (11) de la patte expansible (7) située à lavant par rapport au sens de rotation (R) du manchon (5) et étant incliné selon un premier angle (α) par rapport à l'axe (A) du manchon (5), et une arête latérale arrière (12) de la patte expansible (7) étant inclinée selon un second angle (β) par rapport à l'axe (A), de façon que la somme des deux angles (α, β) soit inférieure à 160°, caractérisée en ce que le premier angle (α) selon lequel s'étend le taillant (10) est d'environ 5° à environ 70°, de préférence d'environ 10° à environ 50°r et est inférieur au second angle (β) selon lequel l'arête latérale arrière (12) de la patte expansible (7) s'étend de manière inclinée par rapport à l'axe (A) du manchon (5), le second angle (β) étant supérieur à 15°, de préférence supérieur à 30°, mais inférieur à 90°.

2. Cheville à dépouille selon la revendication 1, caractérisée en ce que l'extrémité avant libre de la patte expansible (7) portant un taillant (10) est épointée et comporte en particulier une portion frontale (13) qui s'étend de manière sensiblement perpendiculaire à l'axe (A) de la cheville.

3. Cheville à dépouille selon une des revendications précédentes, caractérisée en ce que le taillant (10) et, le cas échéant, la portion frontale (13) comportent des faces frontales qui, par rapport à la face extérieure (9) de la patte expansible (7), sont inclinées selon un angle (γ) d'environ 10° à environ 85°, de préférence d'environ 30° à environ 85°.

4. Cheville à dépouille selon une des revendications précédentes, caractérisée en ce que le taillant (10) et, le cas échéant, la portion frontale (13) comportent des faces frontales courbes.

5. Cheville à dépouille selon une des revendications précédentes, caractérisée en ce que le taillant (10) est un élément rapporté en métal dur qui est inséré dans la surface latérale avant (11) de la patte expansible (7).

6. Cheville à dépouille selon l'une des revendications 1 à 4, caractérisée en ce que le taillant (10) est formé par la portion extrême libre de la patte expansible (7), au moins l'arête latérale avant (11) de ladite portion étant durcie.

7. Cheville à dépouille selon une des revendications précédentes, caractérisée en ce que le taillant (10) est environ 1,5 fois à environ 8 fois, de préférence 2 fois à 6 fois plus dur que la matière du manchon (5).

8. Cheville à dépouille selon une des revendications précédentes, caractérisée en ce que plusieurs taillants (10) sont prévus, le nombre de taillants (10) étant inférieur ou égal au nombre de pattes expansibles (7), et les taillants (10) présentant des premiers angles (α) qui diffèrent au moins partiellement les uns des autres.

9. Cheville à dépouille selon une des revendications précédentes, caractérisée en ce que le manchon (5) est une pièce cintrée en tôle découpée.
